# EUROPEAN PATENT SPECIFICATION

(11) **EP 3 561 786 B1**
(45) Date of publication and mention of the grant of the patent: **26.10.2022**
(21) Application number: 18020170.9
(22) Date of filing: 24.04.2018
(51) Int. Cl.: G08B 13/196, B60R 25/31, B60R 25/04, B60R 25/10, B60R 25/30, B60W 50/00

(54) **METHOD AND DEVICE FOR OPERATING A VEHICLE**
VERFAHREN UND VORRICHTUNG ZUM BETREIBEN EINES FAHRZEUGS
PROCÉDÉ ET DISPOSITIF POUR FAIRE FONCTIONNER UN VÉHICULE

(43) Date of publication of application: 30.10.2019
(73) Proprietor: Dr. Ing. h.c. F. Porsche AG, 70435 Stuttgart (DE)
(72) Inventor: Foligno, Mark, 10245 Berlin (DE)

(56) References cited:
- WO-A1-2010/037338
- WO-A1-2017/155448
- US-A- 5 381 128
- US-A1- 2014 306 799
- US-A1- 2016 129 883
- US-A1- 2017 371 339
- US-A1- 2018 056 940

## Description

The invention concerns a method and device for operating a vehicle, in particular an autonomous vehicle.

WO 2017/15548A1 and US 2009 /0109008A1 disclose methods and devices for theft detection for parked/driverless motor vehicles by using onboard sensors. In particular, images are captured by vehicle on-board cameras, if a triggering event is detected by different kinds of sensors or if a vehicle alarm is activated.

US 2017/0371339 A1 discloses a vehicle occupant safety system. External sensors on a vehicle capture the environment around the occupied vehicle. Approaching targets detected by the external sensors are fed into a neural network to recognize and/or classify approaching targets as potential threats. The system can be trained to distinguish between desired classes, such as, for example, non-threatening persons, persons with a mask, persons with a knife, persons with a gun and other potential threats. When a vehicle includes autonomous driving capabilities, counter measures can include automatically attempting to drive away from an approaching threat for safety of the vehicle occupants.

US 2016/0129883 A1, WO 2017/155448, US2014/306799 A1 and US 2018/056940 A1 disclose aspects of such systems.

In view of this, it is a goal of the present invention to provide an improved method of operating vehicles and a corresponding device for operating vehicles in such threatening situations.

This goal is achieved by a method and device according to the independent claims.

A method according to an example comprises detecting, a presence or an absence of an occupant inside the vehicle, determining, a vehicle parking state, detecting a motion during a time period in a space surrounding the vehicle within a predetermined distance of the vehicle to allow detection of persisting threat during this time period, capturing images during this time period of at least a part of the space surrounding the vehicle to allow detection of persisting threat during this time period, detecting from the motion and the images a presence of a threat to the vehicle, determining a reaction of the vehicle depending on the detected threat, starting the determined response reaction autonomously in case of absence of any occupant inside the vehicle and when the vehicle is in a vehicle parking state autonomously driving the vehicle to a location associated with a well-lit area, detecting the well-lit area in particular from an image captured and parking the vehicle at the well-lit area autonomously. This makes an improved threat handling available for parking driverless vehicles. The vehicle is moved autonomously to a safe spot to remedy the threat. This further improves the independence of the autonomous threat handling.

Advantageously the presence of the threat is detected by determining, a presence of a threatening situation for the vehicle in the at least one image. This way the threat recognition is advanced to situation recognition empowered for example by artificial intelligence algorithms.

Advantageously the method comprises detecting, a presence of a person in the at least one image, determining, an association of the detected person with the vehicle, detecting, an unthreatening situation for the vehicle if an association of the detected person with the vehicle is determined. This allows detecting authorized access to avoid false alarms.

Advantageously the presence of the threat is detected by determining, a presence of a person and of an object, in particular a tool, associable with the person and with a threat scenario. This further improves the detection of a threatening situation.

Advantageously the presence of the threat is detected by determining, a presence of the threat for longer than a first threshold, in particular time period of 10 seconds or 15 seconds, and within a distance of the vehicle that is less than a second threshold, in particular a distance less than 2m or 0m. Using these thresholds false alarms are avoided reliably.

Advantageously the response is at least one of sounding, an audible alarm, signaling a silent alarm signal addressed to a recipient, autonomously driving the vehicle to a location associated with a position of an owner of the vehicle, associated with a building or representative of a law enforcement authority. This way the threat is brought to the attention of a person or the vehicle is moved autonomously to a safe spot to remedy the threat.

Advantageously the method comprises responding with sounding, signaling and/or sending, capturing, at least one further image of at least a part of the space surrounding the vehicle, detecting from the at least one image if the presence of the threat to the vehicle persists, autonomously driving the vehicle, if the threat to the vehicle persists. This two stage approach further improves the autonomous threat handling.

Advantageously, the silent alarm signal including a present location of the vehicle and/or a live video stream, captured by at least one video camera of the vehicle, is sent in case an obstruction preventing the vehicle from autonomously moving is detected from the at least one captured image or another sensor of the vehicle. This way evidence is provided autonomously to aides or for law enforcement in case the vehicle is blocked from moving away from the threat.

Advantageously, the method comprises capturing and /or transmitting a live video stream of at least a part of the space surrounding the vehicle or inside the vehicle captured by at least one video camera of the vehicle, in case a threat is detected. This way in case of threat evidence is provided autonomously to aides or for law enforcement.

Advantageously the method comprises terminating the execution of the response in case of detection of an authorized deactivation command or discontinuation of the threat. This improves the independence of the autonomous threat handling further.

The corresponding device, according to an example, for operating a vehicle comprises an occupant recognition device for detecting a presence or an absence of an occupant inside the vehicle, a vehicle state recognition device for determining a vehicle parking state, a motion sensor for detecting a motion during a time period in a space surrounding the vehicle within a predetermined distance of the vehicle to allow detection of persisting threat during this time period, a camera for capturing images during this time period of at least a part of the space surrounding the vehicle to allow detection of persisting threat during this time period,
a threat recognition device for detecting from the motion and the images a presence of a threat to the vehicle, a response determination device for determining a reaction of the vehicle depending on the detected threat, a vehicle control device for starting the determined response reaction autonomously in case of absence of any occupant inside the vehicle and when the vehicle is in a vehicle parking state autonomously driving the vehicle to a location associated with a well-lit area, detecting the well-lit area in particular from an image captured and parking the vehicle at the well-lit area autonomously.

Embodiments of the invention are disclosed in the description and the drawing.

In the drawing
Fig. 1 schematically depicts steps in a method of operating a vehicle,
Fig. 2 schematically depicts parts of a device for operating the vehicle.

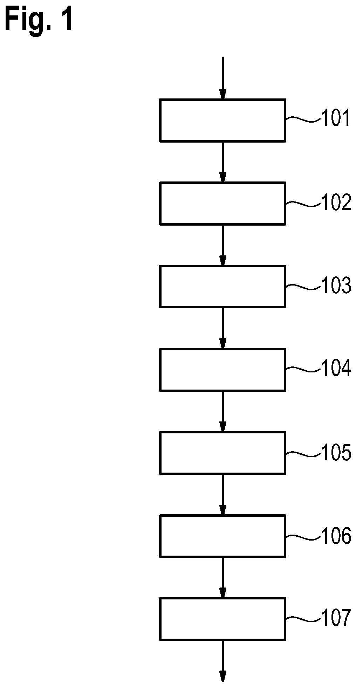

The goal of the method described below is to autonomously react to a threat imposed to a vehicle. The method is described below referencing Figure 1. The method executes for example on a controller in a vehicle and starts for example when the vehicle is operating.

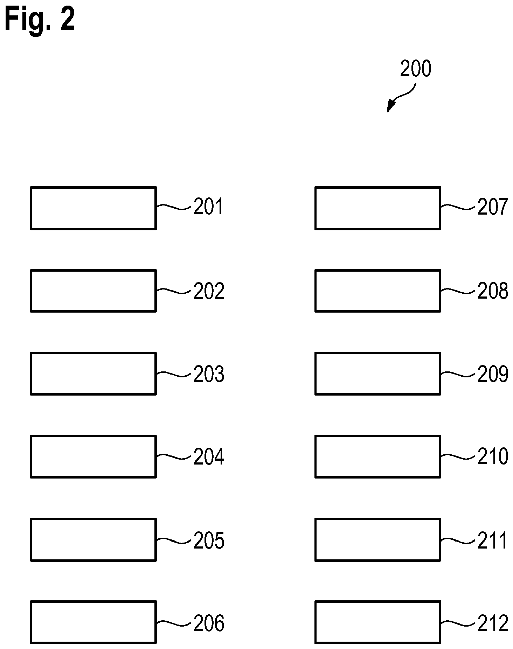

The method is described referencing a specific implementation, in which the vehicle comprises a device for operating the vehicle 200 as depicted in Figure 2. In general, all or some steps of the method may be performed by an integrated controller, having a processor, sensors, actuators and storage with instructions, that when executed by the processer implement the steps of the method.

The device for operating the vehicle 200 comprises an occupant recognition device 201 for detecting, a presence or an absence of an occupant inside the vehicle 200.

The occupants may be recognized by various sensors, e.g. presence sensors integrated in a seat of the vehicle.

The device comprises a vehicle state recognition device 202 for determining a vehicle parking state. A parking state is for example recognized by detection of standstill and absence of a vehicle ignition key.

The device comprises a motion sensor 203 for detecting a motion in a space surrounding the vehicle 200 within a predetermined distance of the vehicle 200. The motion sensor 203 may be a light imaging, detection, and ranging sensor (LIDAR). Ultrasonic sensors may be used as well.

The device comprises a camera 204 for capturing at least one image of at least a part of the space surrounding the vehicle 200. The camera 204 may be a charge coupled device (CCD) for capturing single images or a video stream.

The device comprises a threat recognition device 205 for detecting from the at least one image a presence of a threat to the vehicle 200.

The device may comprise an image recognition device 208. The image recognition device 208 may be adapted to detect a presence of a person in the at least one image. The image recognition device 208 may be adapted to detect a presence of a threatening situation for the vehicle 200 in the at least one image.

The device may comprise an association device 209. The association device 209 may be adapted to determine an association of the detected person with the vehicle 200. For example a database in the vehicle 200 stores images of authorized persons and the association device 209 compares a captured image of a person with stored images by image recognition.

The threat recognition device 205 may be adapted to detect an unthreatening situation for the vehicle 200 if an association of the detected person with the vehicle 200 is determined.

The device comprises a response determination device 206 for determining a reaction of the vehicle 200 depending on the detected threat. The reactions that may be determined will be described in the corresponding method below.

The device comprises a vehicle control device 207 for starting the determined response autonomously in case of absence of any occupant inside the vehicle 200 and when the vehicle 200 is in a vehicle parking state.

The device comprises in the example an audio signal device 210 adapted to sound an audible alarm, such as a horn or siren. The device comprises in the example an optical signal device 211 adapted to provide a visible alarm, such as flashing headlights or interceptors. The device in the example comprises a wireless transmitter 212 adapted to send a silent alarm signal addressed to a recipient. Th wireless transmitter 212 is for example implemented according to the Long Term Evolution telecommunication standard.

The recipient in this case is a mobile phone or a server for processing silent alarms.

The response is started in particular according to the method described below referencing figure 1.

In the method, after a start of the method, a step 101 comprises detecting, in particular by the occupant recognition device 201, a presence or an absence of an occupant inside the vehicle 200.

Afterwards, a step 102 comprises determining, in particular by the vehicle state recognition device 202, the vehicle parking state. The parking state is for example recognized by detection of standstill and absence of a vehicle ignition key.

Afterwards, a step 103 comprises detecting, in particular by the motion sensor 203, a motion in the space surrounding the vehicle 200 within a predetermined distance of the vehicle 200. The motion is for example detected within a distance of the vehicle 200 that is less than a second threshold, in particular a distance less than 2m or 0m. The latter refers to a motion of touching the vehicle.

Afterwards, a step 104 comprises capturing, in particular by the camera 204, at least one image of at least a part of the space surrounding the vehicle 200.

Afterwards, a step 105 comprises detecting, in particular by the threat recognition device 205, from the at least one image a presence of a threat to the vehicle 200. The presence of the threat is detected for example by determining, by the image recognition device 208, a presence of the threat for longer than a first threshold, in particular time period of 10 seconds or 15 seconds, and within a distance of the vehicle 200 that is less than the second threshold, in particular less than 2m or 0m.

The camera 204 may take multiple individual images during the time period or provide a video stream, in order to allow detection of persisting threat during this time period. The motion sensor 203 may detect motion during this time period as well, for the same purpose.

Prolonged proximity of a person to the vehicle 200 is considered a potential threat, unless the person is associated with the vehicle. Association with the vehicle is recognized e.g. by Face recognition.

This way, a person walking by in the vicinity of the vehicle 200 is distinguishable from a person remaining in the vicinity of the vehicle 200.

Afterwards, a step 106 comprises determining, in particular by the response determination device 206, a reaction of the vehicle 200 depending on the detected threat.

For example the presence of the threat is detected by determining, in particular by the image recognition device 208, a presence of a threatening situation for the vehicle 200 in the at least one image. The presence of the threat may be detected by determining, in particular by the image recognition device 208, a presence of a person and of an object, in particular a tool, associable with the person and with a threat scenario. For example a person carrying a crowbar is considered associable with a threat scenario of vehicle theft or burglary.

For example an unthreatening situation for the vehicle 200 is detected, if the image recognition device 208 detects a presence of a person in the at least one image, and the association device 209, determines an association of the detected person with the vehicle 200. For example a captured image of a person matching a stored image of an authorized person is not considered a threat.

In case a threat is detected, a step 107 comprises starting, in particular by the vehicle control device 207, the determined response autonomously in case of absence of any occupant inside the vehicle 200 and when the vehicle 200 is in a vehicle parking state. For example the response is at least one of sounding, in particular by the audio signal device 210, an audible alarm, signaling, in particular by the optical signal device 211, a visible alarm, sending, by the wireless transmitter 212, a silent alarm signal addressed to the recipient.

The response is autonomously driving the vehicle 200, by the vehicle control device 207, to a location associated with a well-lit area.

A preferred implementation of the method comprises responding with sounding, signaling and/or sending, capturing, in particular by the camera 204, at least one further image of at least a part of the space surrounding the vehicle 200, detecting, in particular by the threat recognition device 205, from the at least one image if the presence of the threat to the vehicle 200 persists, autonomously driving the vehicle 200, in particular by the vehicle control device 207, if the threat to the vehicle 200 persists.

Autonomously driving the vehicle 200 to the well-lit area comprises detecting, by the vehicle control device 207, a well-lit area in particular from an image captured by the camera 204, and parking the vehicle 200 at the well-lit area autonomously.

The silent alarm signal may include a present location of the vehicle 200, e.g. from a Global Positioning System.

The method may comprise capturing and /or transmitting a live video stream of at least a part of the space surrounding the vehicle 100 or inside the vehicle 200 captured by at least one video camera of the vehicle 200, in case a threat is detected.

The silent alarm may include a live video stream, captured by at least one video camera 204 of the vehicle 200.

This signal may be sent in case an obstruction, preventing the vehicle 200 from autonomously moving, is detected by the image recognition device 208. The obstruction may be detected from the at least one captured image or another sensor of the vehicle 200, e.g. an ultrasonic sensor.

The response described above is maintained until detection of an authorized deactivation command or discontinuation of the threat. In case the vehicle 200 is moved autonomously away from the threat, the response is maintained until the vehicle 200 is moved to the new location successfully. Then the method terminates the execution of the response.

## Claims

1. A method of operating a vehicle (200), comprising
detecting (103), by a motion sensor, a motion during a time period in a space surrounding the vehicle (200) within a predetermined distance of the vehicle (200) to allow detection of persisting threat during this time period,
capturing (104) images, by a camera, during this time period of at least a part of the space surrounding the vehicle (200) to allow detection of persisting threat during this time period,
detecting (105) from the motion and the images a presence of a threat to the vehicle (200), determining (106) a reaction of the vehicle (200) depending on the threat,
detecting (101) a presence or an absence of an occupant inside the vehicle (200), determining (102) a vehicle parking state,
starting (107), by a vehicle control device (207), the reaction autonomously in case of absence of any occupant inside the vehicle (200) and when the vehicle (200) is in the vehicle wherein the reaction comprises detecting a well-lit area, parking state, autonomously driving the vehicle (200) to a location associated with the well-lit area and parking the vehicle (200) at the well-lit area autonomously by the vehicle control device (207).

2. The method of operating the vehicle (200) according to claim 1, wherein the presence of the threat is detected (105) by determining, a presence of a threatening situation for the vehicle (200) in at least one of said images.

3. The method of operating the vehicle (200) according to claim 2, comprising
detecting a presence of a person in the at least one image, determining for an association of the person with the vehicle (200),
detecting (105) an unthreatening situation for the vehicle (200) if the association of the person with the vehicle (200) is determined.

4. The method of operating the vehicle (200) according to any one of claims 1 to 3, wherein the presence of the threat is detected (105) by determining, a presence of a person and of an object, in particular a tool, associable with the person and with a threat scenario.

5. The method of operating the vehicle (200) according to any one of claims 1 to 4, wherein the presence of the threat is detected (105) by determining a presence of the threat for longer than a first threshold, in particular time period of 10 seconds or 15 seconds, and within a distance of the vehicle (200) that is less than a second threshold, in particular a distance less than 2m or 0m.

6. The method of operating the vehicle (200) according to any one of claims 1 to 5, wherein the reaction comprises responding with at least one of
sounding an audible alarm,
signaling a visible alarm,
sending a silent alarm signal addressed to a recipient.

7. The method of operating the vehicle (200) according to claim 6, wherein the reaction comprises capturing at least one further image of at least a part of the space surrounding the vehicle (200), detecting from the at least one further image if the presence of the threat to the vehicle (200) persists, autonomously driving the vehicle (200) to the location associated with the well-lit area if the threat to the vehicle (200) persists.

8. The method of operating the vehicle (200) according to any one of claims 6 to 7, wherein the silent alarm signal including a present location of the vehicle (200) and/or a live video stream, captured by at least one video camera (204) of the vehicle (200), is sent in case an obstruction, preventing the vehicle (200) from autonomously moving, is detected from at least one of the captured images or another sensor of the vehicle (200).

9. The method of operating the vehicle (200) according to any one of claims 1 to 8, comprising capturing and /or transmitting a live video stream of at least a part of the space surrounding the vehicle or inside the vehicle captured by at least one video camera of the vehicle, in case the threat is detected.

10. The method of operating the vehicle (200) according to any one of claims 1 to 9, comprising terminating the execution of the reaction in case of detection of an authorized deactivation command or discontinuation of the threat.

11. A device for operating a vehicle (200), comprising
a motion sensor (203) for detecting a motion during a time period in a space surrounding the vehicle (200) within a predetermined distance of the vehicle (200) to allow detection of persisting threat during this time period,
a camera (204) for capturing images during this time period of at least a part of the space surrounding the vehicle (200) to allow detection of persisting threat during this time period,
a threat recognition device (205) for detecting from the motion and the images a presence of a threat to the vehicle (200),
a response determination device (206) for determining a reaction of the vehicle (200) depending on the threat, and **characterized by**
an occupant recognition device (201) for detecting, a presence or an absence of an occupant inside the vehicle (200),
a vehicle state recognition device (202) for determining a vehicle parking state, a vehicle control device (207) for starting the reaction autonomously in case of absence of any occupant inside the vehicle (200) and when the vehicle (200) is in the vehicle parking state,
wherein the reaction causes the vehicle control device (207) to detect a well-lit area, drive the vehicle (200) to a location associated with the well-lit area
and park the vehicle (200) at the well-lit area autonomously.

## Patentansprüche

1. Verfahren zum Betreiben .eines Fahrzeugs (200), umfassend:
Erkennen (103), durch einen Bewegungssensor, einer Bewegung während einer Zeitspanne in einem das Fahrzeug (200) umgebenden Raum innerhalb eines vorbestimmten Abstands vom Fahrzeug (200), um die Erkennung einer anhaltenden Bedrohung während dieser Zeitspanne zu ermöglichen,
Aufnehmen (104) von Bildern, durch eine Kamera, während dieser Zeitspanne von wenigstens einem Teil des das Fahrzeug (200) umgebenden Raums, um die Erkennung einer anhaltenden Bedrohung während dieser Zeitspanne zu ermöglichen,
Erkennen (105), anhand der Bewegung und der Bilder, des Vorhandenseins einer Bedrohung für das Fahrzeug (200), Bestimmen (106) einer Reaktion des Fahrzeugs (200) in Abhängigkeit von der Bedrohung,
Erkennen (101) der Anwesenheit oder Abwesenheit von Insassen im Fahrzeug (200),
Bestimmen (102) eines Fahrzeugparkzustands, autonomes Starten (107), durch eine Fahrzeugsteuervorrichtung (207), der Reaktion im Falle der Abwesenheit von Insassen im Fahrzeug (200) und wenn sich das Fahrzeug (200) im Fahrzeugparkzustand befindet,
wobei die Reaktion umfasst: Erkennen eines gut ausgeleuchteten Bereichs,
autonomes Fahren des Fahrzeugs (200) zu einem Ort, der mit dem gut ausgeleuchteten Bereich verknüpft ist, und autonomes Parken des Fahrzeugs (200) in dem gut ausgeleuchteten Bereich durch die Fahrzeugsteuervorrichtung (207).

2. Verfahren zum Betreiben des Fahrzeugs (200) gemäß Anspruch 1, wobei das Vorhandensein der Bedrohung erkannt - wird (105), indem das Vorliegen einer bedrohlichen Situation für das Fahrzeug (200) in wenigstens einem der Bilder bestimmt wird.

3. Verfahren zum Betreiben des Fahrzeugs (200) gemäß Anspruch 2, umfassend
Erkennen der Anwesenheit einer Person in dem wenigstens einen Bild,
Bestimmen einer Verknüpfung der Person mit dem Fahrzeug (200),
Erkennen (105) einer nicht bedrohlichen Situation für das Fahrzeug (200), wenn die Verknüpfung der Person mit dem Fahrzeug (200) bestimmt wird.

4. Verfahren zum Betreiben des Fahrzeugs (200) gemäß einem der Ansprüche 1 bis 3, wobei das Vorhandensein der Bedrohung erkannt wird (105), indem die Anwesenheit einer Person und das Vorhandensein eines Objekts, insbesondere eines Werkzeugs, das der Person und einem Bedrohungsszenario zugeordnet werden kann, bestimmt wird.

5. Verfahren zum Betreiben des Fahrzeugs (200) gemäß einem der Ansprüche 1 bis 4, wobei das Vorhandensein der Bedrohung erkannt wird (105), indem das Vorhandensein der Bedrohung für länger als einen ersten Schwellenwert, insbesondere eine Zeitspanne von 10 Sekunden oder 15 Sekunden, und innerhalb eines Abstands zum Fahrzeug (200), der kleiner als ein zweiter Schwellenwert ist, insbesondere ein Abstand von weniger als 2 m oder 0 m, bestimmt wird.

6. Verfahren zum Betreiben des Fahrzeugs (200) gemäß einem der Ansprüche 1 bis 5, wobei die Reaktion umfasst, mit wenigstens einem der folgenden zu reagieren:
Auslösen eines akustischen Alarms,
Signalisieren eines visuellen Alarms,
Senden eines stillen Alarmsignals an einen Empfänger.

7. Verfahren zum Betreiben des Fahrzeugs (200) gemäß Anspruch 6, wobei die Reaktion umfasst:
Aufnehmen wenigstens eines weiteren Bildes von wenigstens einem Teil des das Fahrzeug (200) umgebenden Raums,
Erkennen, anhand des wenigstens einen weiteren Bildes, ob das Vorhandensein der Bedrohung für das Fahrzeug (200) fortbesteht,
autonomes Fahren des Fahrzeugs (200) zu dem Ort, der mit dem gut ausgeleuchteten Bereich verknüpft ist, wenn die Bedrohung für das Fahrzeug (200) fortbesteht.

8. Verfahren zum Betreiben des Fahrzeugs (200) gemäß einem der Ansprüche 6 bis 7, wobei das stille Alarmsignal, das einen gegenwärtigen Standort des Fahrzeugs (200) und/oder einen Live-Videodatenstrom enthält, der von wenigstens einer Videokamera (204) des Fahrzeugs (200) aufgenommen wurde, gesendet wird, falls ein Hindernis, das das Fahrzeug (200) daran hindert, sich autonom zu bewegen, anhand wenigstens eines der aufgenommenen Bilder oder von einem anderen Sensor des Fahrzeugs (200) erkannt wird.

9. Verfahren zum Betreiben des Fahrzeugs (200) gemäß einem der Ansprüche 1 bis 8, umfassend:
Aufnehmen und/oder Senden eines Live-Videodatenstroms von wenigstens einem Teil des das Fahrzeug umgebenden Raums oder des Innenraums des Fahrzeugs, der von wenigstens einer Videokamera des Fahrzeugs aufgenommen wurde, falls die Bedrohung erkannt wird.

10. Verfahren zum Betreiben des Fahrzeugs (200) gemäß einem der Ansprüche 1 bis 9, umfassend, die Ausführung der Reaktion bei Erkennung eines autorisierten Deaktivierungsbefehls oder bei Wegfall der Bedrohung zu beenden.

11. System zum Betreiben eines Fahrzeugs (200), umfassend:
einen Bewegungssensor (203) zum Erkennen einer Bewegung während einer Zeitspanne in einem das Fahrzeug (200) umgebenden Raum innerhalb eines vorbestimmten Abstands vom Fahrzeug (200), um die Erkennung einer anhaltenden Bedrohung während dieser Zeitspanne zu ermöglichen,
eine Kamera (204) zum Aufnehmen von Bildern während dieser Zeitspanne von wenigstens einem Teil des das Fahrzeug (200) umgebenden Raums, um die Erkennung einer anhaltenden Bedrohung während dieser Zeitspanne zu ermöglichen,
ein Bedrohungserkennungssystem (205) zum Erkennen, anhand der Bewegung und der Bilder, des Vorhandenseins einer Bedrohung für das Fahrzeug (200),
eine Reaktionsbestimmungsvorrichtung (206) zum Bestimmen einer Reaktion des Fahrzeugs (200) in Abhängigkeit von der Bedrohung, und **gekennzeichnet durch**
eine Insassenerkennungsvorrichtung (201) zum Erkennen der Anwesenheit oder Nichtanwesenheit von Insassen im Fahrzeug (200),
eine Fahrzeugzustandserkennungsvorrichtung (202) zum Bestimmen eines Fahrzeugparkzustands,
eine Fahrzeugsteuervorrichtung (207) zum autonomen Starten der Reaktion im Falle der Abwesenheit von Insassen innerhalb des Fahrzeugs (200) und wenn sich das Fahrzeug (200) im Fahrzeugparkzustand befindet,
wobei die Reaktion die Fahrzeugsteuervorrichtung (207) veranlasst zum Erkennen eines gut ausgeleuchteten Bereichs, autonomen Fahren des Fahrzeugs (200) zu einem Ort, der mit dem gut ausgeleuchteten Bereich verknüpft ist, und
Parken des Fahrzeugs (200) in dem gut ausgeleuchteten Bereich.

## Revendications

1. Procédé pour faire fonctionner un véhicule (200), comprenant
la détection (103), par un capteur de mouvement, d'un mouvement pendant une période de temps dans un espace entourant le véhicule (200) à une distance prédéterminée du véhicule (200) pour permettre la détection d'une menace persistante pendant cette période de temps,
la capture (104) d'images, par une caméra, pendant cette période de temps, d'au moins une partie de l'espace entourant le véhicule (200) pour permettre la détection d'une menace persistante pendant cette période de temps, la détection (105), à partir du mouvement et des images, de la présence d'une menace pour le véhicule (200),
la détermination (106) d'une réaction du véhicule (200) en fonction de la menace,
la détection (101) de la présence ou de l'absence d'un occupant à l'intérieur du véhicule (200),
la détermination (102) d'un état de stationnement de véhicule,
le déclenchement (107), par un dispositif de commande de véhicule (207), de la réaction de manière autonome en cas d'absence de tout occupant à l'intérieur du véhicule (200) et lorsque le véhicule (200) est dans l'état de stationnement de véhicule,
dans lequel la réaction comprend la détection d'une zone bien éclairée,
la conduite autonome du véhicule (200) vers un emplacement associé à la zone bien éclairée et le stationnement du véhicule (200) dans la zone bien éclairée de manière autonome par le dispositif de commande de véhicule (207).

2. Procédé pour faire fonctionner le véhicule (200) selon la revendication 1, dans lequel la présence de la menace est détectée (105) en déterminant la présence d'une situation menaçante pour le véhicule (200) dans au moins l'une desdites images.

3. Procédé pour faire fonctionner le véhicule (200) selon la revendication 2, comprenant
la détection de la présence d'une personne dans ladite au moins une image,
la détermination d'une association de la personne avec le véhicule (200),
la détection (105) d'une situation non menaçante pour le véhicule (200) si l'association de la personne avec le véhicule (200) est déterminée.

4. Procédé pour faire fonctionner le véhicule (200) selon l'une quelconque des revendications 1 à 3, dans lequel la présence de la menace est détectée (105) en déterminant la présence d'une personne et d'un objet, notamment d'un outil, pouvant être associé à la personne et à un scénario de menace.

5. Procédé pour faire fonctionner le véhicule (200) selon l'une quelconque des revendications 1 à 4, dans lequel la présence de la menace est détectée (105) en déterminant la présence de la menace pendant une durée supérieure à un premier seuil, notamment une durée de 10 secondes ou de 15 secondes, et à une distance du véhicule (200) inférieure à un deuxième seuil, notamment une distance inférieure à 2m ou à 0m.

6. Procédé pour faire fonctionner le véhicule (200) selon l'une quelconque des revendications 1 à 5, dans lequel la réaction comprend la réponse par au moins l'un des moyens suivants
le déclenchement d'une alarme sonore,
la signalisation d'une alarme visible,
l'envoi d'un signal d'alarme silencieux adressé à un destinataire.

7. Procédé pour faire fonctionner le véhicule (200) selon la revendication 6, dans lequel la réaction comprend
la capture d'au moins une autre image d'au moins une partie de l'espace entourant le véhicule (200),
la détection, à partir de ladite au moins une autre image, du fait de savoir si la présence de la menace pour le véhicule (200) persiste,
la conduite autonome du véhicule (200) vers l'emplacement associé à la zone bien éclairée si la menace pour le véhicule (200) persiste.

8. Procédé pour faire fonctionner le véhicule (200) selon l'une quelconque des revendications 6 à 7, dans lequel le signal d'alarme silencieux comprenant un emplacement actuel du véhicule (200) et/ou un flux vidéo en direct, capturé par au moins une caméra vidéo (204) du véhicule (200), est envoyé dans le cas où une obstruction, empêchant le véhicule (200) de se déplacer de manière autonome, est détectée à partir d'au moins l'une des images capturées ou d'un, autre capteur du véhicule (200).

9. Procédé pour faire fonctionner le véhicule (200) selon l'une quelconque des revendications 1 à 8, comprenant
la capture et/ou la transmission d'un flux vidéo en direct d'au moins une partie de l'espace entourant le véhicule ou de l'intérieur du véhicule capturé par au moins une caméra vidéo du véhicule, dans le cas où la menace est détectée.

10. Procédé pour faire fonctionner le véhicule (200), selon l'une quelconque des revendications 1 à 9, comprenant l'interruption de l'exécution de la réaction en cas de détection d'une commande de désactivation autorisée ou de cessation de la menace.

11. Dispositif pour faire fonctionner un véhicule (200), comprenant
un capteur de mouvement (203) pour détecter un mouvement pendant une période de temps dans un espace entourant le véhicule (200) à une distance prédéterminée du véhicule (200) pour permettre la détection d'une menace persistante pendant cette période de temps,
une caméra (204) pour capturer des images, pendant cette période de temps, d'au moins une partie de l'espace entourant le véhicule (200) pour permettre la détection d'une menace persistante pendant cette période de temps, un dispositif de reconnaissance de menace (205) pour détecter, à partir du mouvement et des images, la présence d'une menace pour le véhicule (200),
un dispositif de détermination de réaction (206) pour déterminer une réaction du véhicule (200) en fonction de la menace, et **caractérisé par**
un dispositif de reconnaissance d'occupant (201) pour détecter la présence ou l'absence d'un occupant à l'intérieur du véhicule (200),
un dispositif de reconnaissance d'état de véhicule (202) pour déterminer un état de stationnement de véhicule,
un dispositif de commande de véhicule (207) pour déclencher la réaction de manière autonome en cas d'absence de tout occupant à l'intérieur du véhicule (200) et lorsque le véhicule (200) est dans l'état de stationnement de véhicule,
dans lequel la réaction amène le dispositif de commande de véhicule (207) à détecter une zone bien éclairée,. à conduire le véhicule (200) vers un emplacement associé à la zone bien éclairée et à stationner le véhicule (200) dans la zone-bien éclairée de manière autonome.
